# EUROPEAN PATENT SPECIFICATION

(11) **EP 3 819 230 B1**
(45) Date of publication and mention of the grant of the patent: **15.03.2023**
(21) Application number: 20200467.7
(22) Date of filing: 07.10.2020
(51) Int. Cl.: B65D 43/16, B65D 55/02, B65D 51/16

(54) **NON-EQUAL LENGTH OPEN-IDENTIFICATION CONTAINER**
OFFEN-IDENTIFIKATIONSBEHÄLTER MIT UNGLEICHER LÄNGE
CONTENEUR D'IDENTIFICATION OUVERT DE LONGUEUR NON ÉGALE

(30) Priority: 08.11.2019 TW 108140742
(43) Date of publication of application: 12.05.2021
(73) Proprietor: South Plastic Industry Co., Ltd., New Taipei City 221 (TW)
(72) Inventor: Wang, Tong-Chang, Cambridge, Cambridgeshire CB1 1AH (GB)
(74) Representative: Horak, Michael

(56) References cited:
- US-A1- 2017 057 706

## Description

### (a) Technical Field of the Invention

The present invention relates to a container, and more particularly to a container which is not easy to recover after opening and can be visually recognized whether it is opened.

### (b) Description of the Prior Art

In supermarkets, various plastic containers, such as boxes, cups or bowls, that are formed by vacuum molding are very suitable for holding food to keep it fresh; such kinds of products usually are transparent materials, making consumers clear at the time of food purchase to avoid after-sales disputes. But nevertheless, many consumers still further want to make sure whether the food in a container is fresh and complete so that they open the plastic container to check, and they do not recover the product back to it's original shape, resulting in the freshness loss of the food in the plastic container and causing the plastic container to be damaged to affect the container appearance. Moreover, if no one find out early that the package box has been opened, the food in the box is easy to be spoiled, which causes food waste and increases the cost burden on businesses.

In addition, the current conventional plastic containers are also gradually designed to have an easy open-identification structure for each of them; in this structure, the burrs generated by a dotted broken point after the tear are often used to refit the torn-apart parts, causing users not easy to visually identify whether a plastic container is opened or not.

Prior patent documents are known, such as US 2017/057706 A1 which accords with the preamble of appended claim 1. The patent document discloses a tamper-evident container for food storage that uses a round male to female post lock on a single corner and after the cover is locked to the tray base, it requires breaking the corner tray tab to open the container. The tab when being torn off provides positive evidence of the container being opened.

### SUMMARY OF THE INVENTION

To overcome the above disadvantages, the present invention proposes a non-equal length open-identification container, including: a cover, one side of a top surface thereof extended with an elastic sheet having a predetermined extension length, and an end thereof having a first coupling element facing down; a box, one side of a top surface thereof horizontally extended with a flange having a notch, the flange projected with a stopping portion, and the cover adapted to be in combination with a top portion of the box, allowing a bottom surface of the sheet to be in contact with a top surface of the stopping portion; and a second coupling element, having a groove and in combination with the notch with a dotted broken line, wherein the first coupling element is offset from the groove such that after the cover is in combination with the box, a bottom surface of the cover is surrounded with a sealing wall; an inner wall of the box is configured with a first step portion and a second step portion; and a bottom surface of the sealing wall is in contact with the first step portion and a top surface of the sealing wall is flush with said second step portion, wherein the sheet is depressible down to allow the first coupling element to be in engagement with the groove, and wherein the second coupling element is still in combination with said first coupling element after the second coupling element is torn away along the dotted broken line and the sheet is recovered due to the elasticity thereof after the second coupling element is torn away along the dotted broken line, allowing the second coupling element to be positioned above the notch to form a difference in level and thus not in engagement with the notch and the sheet be pushed outside the notch.

The advantages of the present invention are in that the first coupling element and second coupling element are not easy to be detached from each other after the combination thereof with each other, and the second coupling element is still in combination with the first coupling element when it is torn away. In addition, the second coupling element is positioned above the notch after the sheet is recovered, and the sheet is pushed outside the notch incapable of engagement with the notch so that users can clearly see that the second coupling element has been torn.

### BRIEF DESCRIPTION OF THE DRAWINGS

FIG. 1 is a perspective view of a cover of the present invention;

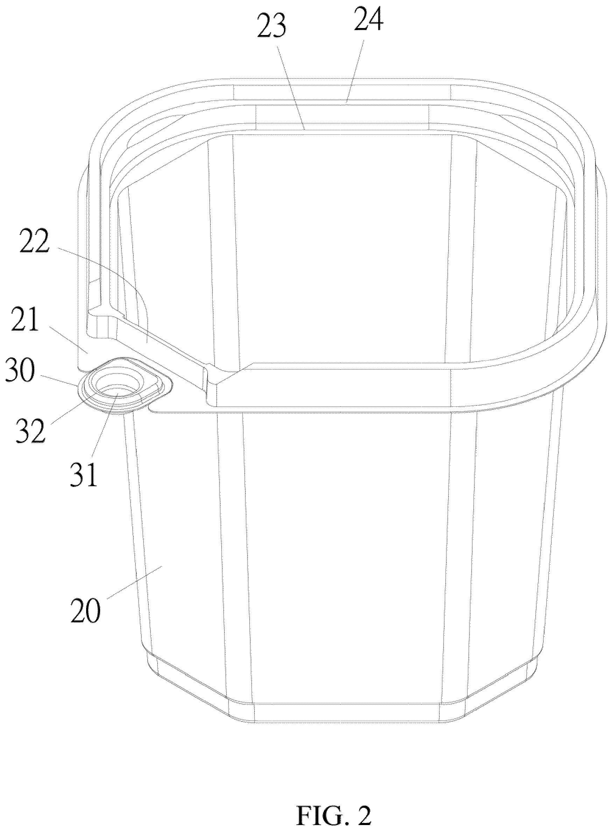

FIG. 2 is a perspective view of a box of the present invention;
FIG. 3 is a perspective view of a second coupling element of the present invention;
FIG. 4 shows the second coupling element in combination with a notch according to the present invention;
FIG. 5 shows a first coupling element offset from a groove according to present invention;
FIG. 6 is a perspective view of the present invention in a combination state; and
FIG. 7 shows the second coupling element separated from the notch according to the present invention.

### DETAILED DESCRIPTION OF THE PREFERRED EMBODIMENTS

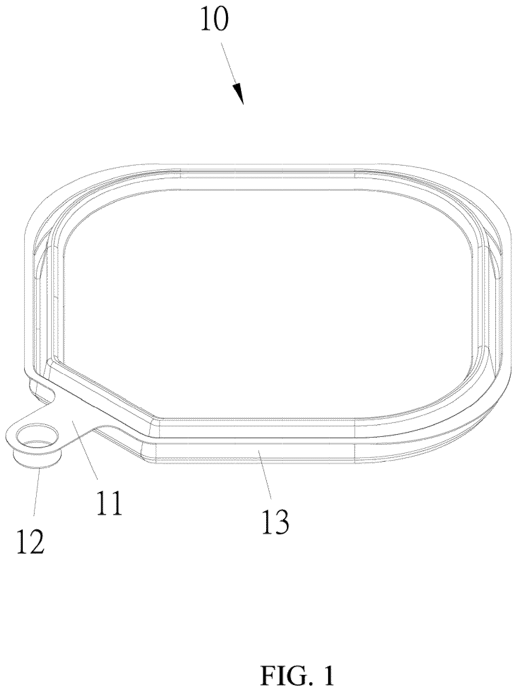

Referring to FIG. 1, a non-equal length open-identification container of the present invention includes a cover 10 and box 20.

The cover 10 is extended from one side of the top surface thereof with an elastic sheet 11 having a predetermined extension length. In a preferred embodiment, the predetermined extension length is 2mm, but the present invention is not so limited. Furthermore, the end of the sheet 11 has a first coupling election 12 facing down, and the bottom surface of the cover 10 is surrounded with a sealing wall 13.

The box 20 is horizontally extended from one side of the top surface thereof with a flange 21 having a notch 211, where the flange 21 is projected with a stopping portion 22, and the inner wall of the box 20 is configured with a first step portion 23 and second step portion 24.

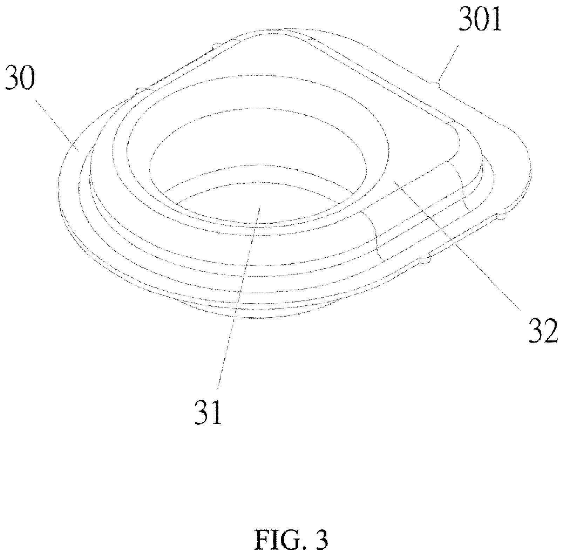

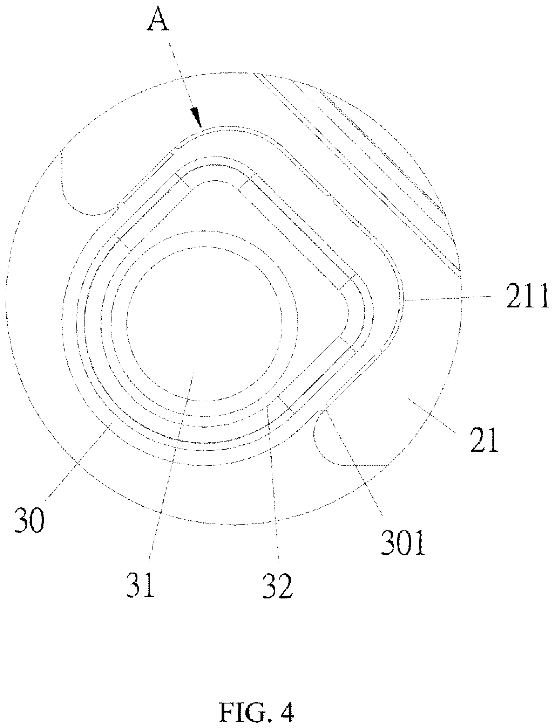

Referring to FIGS. 3 and 4, the present invention is further configured with a second coupling element 30 having a groove 31 and annular platform portion 32, where the groove 31 is positioned inside the platform portion 32 and top narrow bottom wide.

The second coupling portion 30 is in combination with the notch 21 with a dotted broken line A, and a plurality of protrusions 301 are convexly arranged at intervals on the peripheral edge of the second coupling portion 30 opposite to the notch 211 and used to be in combination with the notch 211. Therefore, the protrusions 301 is combined with the notch 211 to form the dotted broken line A, thereby facilitating tearing away the second coupling element 30.

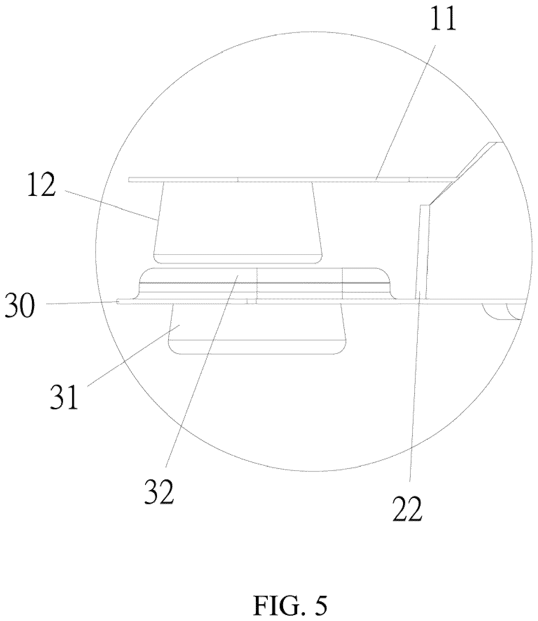

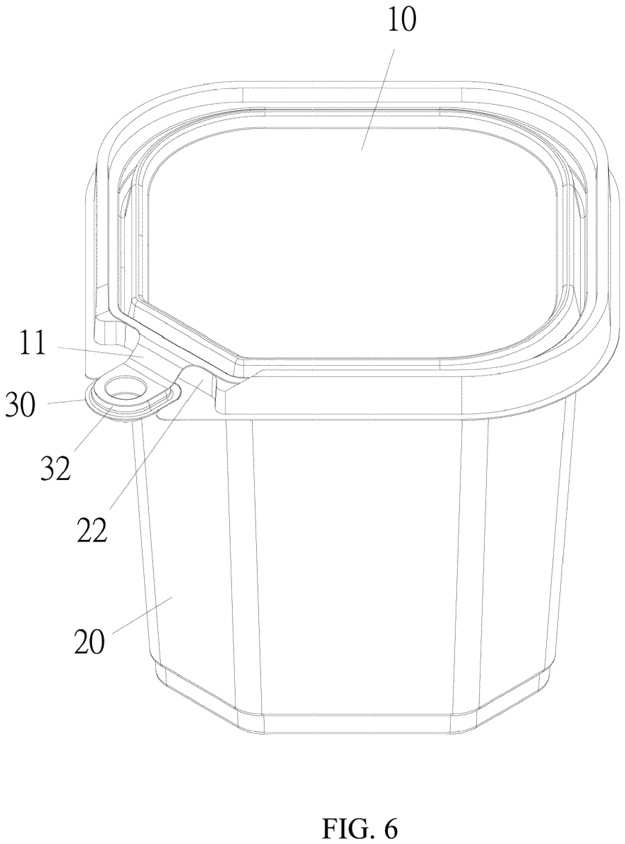

Referring to FIG. 5, the bottom surface of the sealing wall 13 is in contact with the first step portion 23 when the cover 10 is in combination with the box 20, where the top surface of the sealing wall 13 is flush with the second step portion 24. Referring to FIG. 6, the bottom surface of the sheet 11 is in contact with the top surface of the stopping portion 22 at the same time; the second coupling element 30 is positioned below the sheet 11 after the cover 10 is in combination with the box 20, and the first coupling element 12 is offset from the groove 31. Since the sheet 11 is elastic, the sheet 11 still can be pressed down, allowing the first coupling element 12 to change the direction to correspond to the groove 31, and the first coupling element 12 is in engagement with the groove 31. When the first coupling element 12 is in combination the groove 31, the top surface of the platform portion 32 is in contact with the bottom surface of the sheet 11.

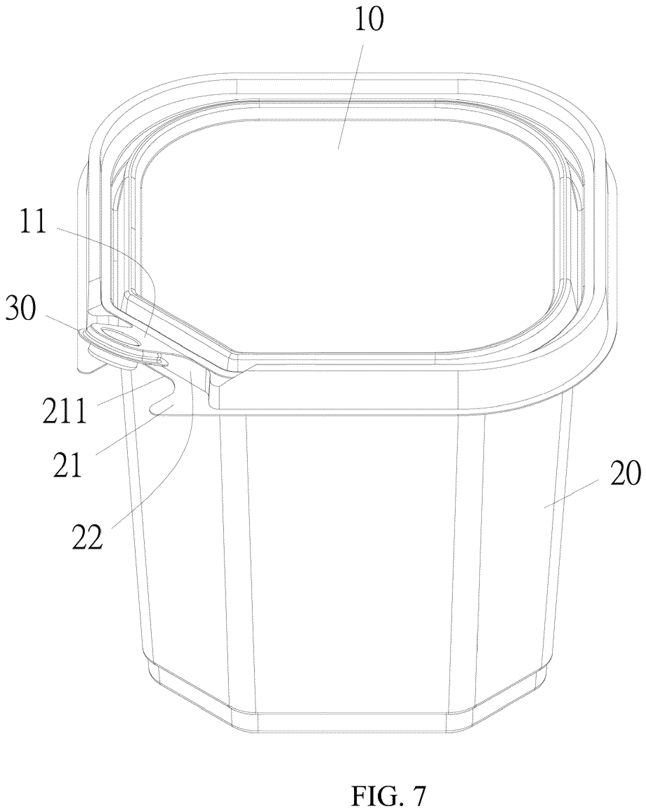

Referring to FIG. 7, the second coupling element 30 still can be in combination with the first coupling element 12 after the second coupling element 30 is torn away along the dotted broken line A. The sheet 11 can be recovered due to its elasticity, allowing the second coupling element 30 to be positioned above the notch 211 to form a difference in level and allowing it not to be in engagement with the notch 211 so that users can clearly see that the second coupling portion 30 has been torn.

## Claims

1. A non-equal length open-identification container, comprising:
a cover (10), one side of a top surface thereof extended with an elastic sheet (11) having a predetermined extension length, and an end thereof having a first coupling element (12) facing down;
a box (20), one side of a top surface thereof horizontally extended with a flange (21) having a notch (211), said flange (21) projected with a stopping portion (22), and said cover (10) adapted to be in combination with a top portion of said box (20), allowing a bottom surface of said sheet (11) to be in contact with a top surface of said stopping portion (22); and
a second coupling element (30), having a groove (31) and in combination with said notch (211) with a dotted broken line (A wherein a bottom surface of said cover (10) is surrounded with a sealing wall (13); an inner wall of said box (20) is configured with a first step portion (23); and wherein a bottom surface of said sealing wall (13) is in contact with said first step portion (23) after said cover (10) is in combination with said box (20),
**characterized in that** the inner wall of said box (20) is configured with a second step portion (24); and
said first coupling element (12) is offset from said groove (31) such that after said cover (10) is in combination with said box (20), a top surface of said sealing wall (13) is flush with said second step portion (24), wherein said sheet is depressible down to allow said first coupling element (12) to be in engagement with said groove (31), and wherein said second coupling element (30) is still in combination with said first coupling element (12) after said second coupling element (30) is torn away along the dotted broken line (A) and said sheet (11) is recovered due to the elasticity thereof after said second coupling element (30) is torn away along said dotted broken line (A), allowing said second coupling element (30) to be positioned above said notch (211) to form a difference in level and thus not in engagement with said notch (211) and said sheet (11) be pushed outside said notch (211).

2. The container according to claim 1, wherein said second coupling element (30) is configured with an annular platform portion (32), said groove (31) is positioned inside said platform portion (32), and a top surface of said platform portion (32) is in contact with a bottom surface of said sheet.

3. The container according to claim 1 or 2, wherein said groove (31) is top narrow bottom wide, allowing said first coupling element to be in tight fit with said groove (31).

## Patentansprüche

1. Offen-Identifikationsbehälter mit ungleicher Länge, der Folgendes umfasst:
eine Abdeckung (10), deren eine Seite einer Oberseite mit einer elastischen Schicht (11) verlängert ist, die eine vorbestimmte Ausziehlänge hat, und deren eines Ende ein erstes Kopplungselement (12) hat, das nach unten weist;
einen Kasten (20), dessen eine Seite einer Oberseite horizontal mit einem Flansch (21) verlängert ist, der eine Kerbe (211) hat, wobei der besagte Flansch (21) mit einem Anschlagteil (22) vorsteht und die besagte Abdeckung (10) angepasst ist, um in Kombination mit einem Oberteil des besagten Kastens (20) zu sein, was einer Bodenoberfläche der besagten Schicht (11) ermöglicht, in Kontakt mit einer Oberfläche des besagten Anschlagteils (22) zu sein; und
ein zweites Kopplungselement (30), das eine Nut (31) hat und in Kombination mit der besagten Kerbe (211) durch eine gepunktete unterbrochene Linie (A) ist,
wobei eine Bodenoberfläche der besagten Abdeckung (10) von einer Dichtungswand (13) umgeben ist; eine Innenwand des besagten Kastens (20) mit einem ersten Stufenteil (23) konfiguriert ist; und wobei eine Bodenoberfläche der besagten Dichtungswand (13) in Kontakt mit dem besagten ersten Stufenteil (23) ist, nachdem die besagte Abdeckung (10) in Kombination mit dem besagten Kasten (20) ist,
**gekennzeichnet dadurch, dass** die Innenwand des besagten Kastens (20) mit einem zweiten Stufenteil (24) konfiguriert ist; und das besagte erste Kopplungselement (12) von der besagten Nut (31) so versetzt ist, dass, nachdem die besagte Abdeckung (10) in Kombination mit dem besagten Kasten (20) ist, eine Oberfläche der besagten Dichtungswand (13) bündig mit dem besagten zweiten Stufenteil (24) ist, wobei die besagte Schicht nach unten niederdrückbar ist, um dem besagten ersten Kopplungselement (12) zu ermöglichen, in Eingriff mit der besagten Nut (31) zu stehen, und wobei das besagte zweite Kopplungselement (30) noch in Kombination mit dem besagten ersten Kopplungselement (12) ist, nachdem das besagte zweite Kopplungselement (30) entlang der gepunkteten unterbrochenen Linie (A) abgerissen wurde und die besagte Schicht (11) aufgrund ihrer Elastizität zurückgewonnen wird, nachdem das besagte zweite Kopplungselement (30) entlang der besagten gepunkteten unterbrochenen Linie (A) abgerissen wurde, was dem besagten zweiten Kopplungselement (30) ermöglicht, oberhalb der besagten Kerbe (211) positioniert zu werden, um einen Höhenunterschied zu bilden und somit nicht in Eingriff mit der besagten Kerbe (211) zu stehen, und die besagte Schicht (11) aus der besagten Kerbe (211) herauszudrücken.

2. Behälter nach Anspruch 1, wobei das besagte zweite Kopplungselement (30) mit einem ringförmigen Plattformteil (32) konfiguriert ist, die besagte Nut (31) innerhalb des besagten Plattformteils (32) positioniert ist und eine Oberseite des besagten Plattformteils (32) in Kontakt mit einer Bodenoberfläche der besagten Schicht ist.

3. Behälter nach Anspruch 1 oder 2, wobei die besagte Nut (31) oben schmal und unten breit ist, was dem besagten ersten Kopplungselement ermöglicht, fest in der besagten Nut (31) zu sein.

## Revendications

1. Conteneur d'identification ouvert de longueur non égale, comprenant :
un couvercle (10), un côté d'une surface supérieure de celui-ci prolongé par une feuille élastique (11) ayant une longueur d'extension prédéterminée, et une extrémité de celui-ci ayant un premier élément de couplage (12) tourné vers le bas ;
un boîtier (20), un côté d'une surface supérieure de celui-ci s'étendant horizontalement avec un rebord (21) ayant une encoche (211), ledit rebord (21) faisant saillie avec une partie d'arrêt (22), et ledit couvercle (10) adapté pour être en combinaison avec une partie supérieure de ladite boîte (20), permettant à une surface inférieure de ladite feuille (11) d'être en contact avec une surface supérieure de ladite partie d'arrêt (22) ; et
un deuxième élément de couplage (30), ayant une rainure (31) et en combinaison avec ladite encoche (211) avec une ligne pointillée (A),
où une surface inférieure dudit couvercle (10) est entourée d'une paroi d'étanchéité (13 ) ; une paroi intérieure de ladite boîte (20) est configurée avec une première partie étagée (23) ; et où une surface inférieure de ladite paroi d'étanchéité (13) est en contact avec ladite première partie étagée (23) après que ledit couvercle (10) est en combinaison avec ladite boîte (20),
**caractérisé en ce que** la paroi intérieure de ladite boîte (20) est configurée avec une deuxième partie étagée (24) ; et ledit premier élément de couplage (12) est décalé de ladite rainure (31) de sorte qu'après que ledit couvercle (10) est en combinaison avec ladite boîte (20), une surface supérieure de ladite paroi d'étanchéité (13) est au ras de ladite deuxième partie étagée (24), où ladite feuille est enfonçable pour permettre audit premier élément de couplage (12) d'être en prise avec ladite rainure (31), et où ledit deuxième élément de couplage (30) est toujours en combinaison avec ledit premier élément de couplage (12) après que ledit deuxième élément de couplage (30) a été arraché le long de la ligne pointillée (A) et que ladite feuille (11) a été récupérée en raison de son élasticité après que ledit deuxième élément de couplage (30) a été arraché le long de ladite ligne pointillée (A), permettant audit deuxième élément de couplage (30) d'être positionné au-dessus de ladite encoche (211) pour former une différence de niveau et donc pas en prise avec ladite encoche (211) et ladite feuille (11) est poussée à l'extérieur de ladite encoche (211).

2. Récipient selon la revendication 1, où ledit deuxième élément de couplage (30) est configuré avec une partie de plateforme annulaire (32), ladite rainure (31) est positionnée à l'intérieur de ladite partie de plateforme (32) et une surface supérieure de ladite partie de plateforme (32) est en contact avec une surface inférieure de ladite feuille.

3. Récipient selon la revendication 1 ou 2, où ladite rainure (31) est à sommet étroit et base large, permettant audit premier élément de couplage d'être en ajustement serré avec ladite rainure (31).
